# EUROPÄISCHE PATENTSCHRIFT

(11) **EP 0 396 182 B1**
(45) Veröffentlichungstag und Bekanntmachung des Hinweises auf die Patenterteilung: **14.12.1994**
(21) Anmeldenummer: 90201052.9
(22) Anmeldetag: 26.04.1990
(51) Int. Cl.: A01B 39/22, A01B 39/18

(54) **Hackpflug- oder Jätegerät für Zucht und Anbau von Kultur- und Ziergewächsen**
Hoeing or weeding machine for agriculture and horticulture
Bineuse ou sarcleuse pour l'agriculture et l'horticulture

(30) Priorität: 02.05.1989 NL 8901106
(43) Veröffentlichungstag der Anmeldung: 07.11.1990
(73) Patentinhaber: GEBR. CAPPON (Izaak Gilles Cappon, Martinus Cornelis Cappon, Cornelis Cappon), NL-4451 RP Heinkenszand (NL)
(72) Erfinder: Cappon, Izaak Gilles, NL-4451 AC Heinkenszand (NL)
(74) Vertreter: Bartelds, Erik

(56) Entgegenhaltungen:
- BE-A- 637 330
- US-A- 1 769 142

## Beschreibung

Die vorliegende Erfindung bezieht sich auf ein landwirtschaftliches Gerät für motorisierte Zugkraft oder Antrieb im landwirtschaftlichen und Gartenbaubetrieb, insbesondere auf ein Hack- oder Jätegerat für das Hacken, Schaufeln und Ausjäten von Zuchtbeeten von Kulturgewächsen, wie Gemüse, Zwiebelgewächse, Beeren, Blumen und Viehfuttergewächse.

Das Ausjäten des Unkrauts aus Beeten solcher Kulturgewächse ist eine besonders arbeitsintensive Prozedur.

Die Anwendung von chemischen Unkrautbekämpfungsmitteln, wie von den bekannten Herbiziden, unterliegt immer mehr Bedenken, weil sie für den Bauern gefährlich und für die Umwelt (Atmosphäre und Grundwasser) schädlich ist, wobei der Abbau der dazu verwendeten Verbindungen infolge klimatischer Einflüsse schwierig exakt bestimmbar ist, sodass auch Bedenken vonseiten des Verbrauchers gegen diese Unkrautbekämpfungsmittel bestehen bleiben.

Es wurde deshalb ein wirtschaftliches Gerät entwickelt, um mit Hilfe eines Schleppers eine zweckmässige Hacktechnik zum Jäten auf Zuchtbeeten anwenden zu können.

Es existieren bereits Schaufelhalter mit einem oder mehreren Scharniergelenken. Die Schaufelgeräte mit mehreren Scharniergelenken, sogenannte Parallelogrammgeräte, halten bei auf- und abgehender Bewegung den Winkel zwischen Hacke und Erdboden ein. Indem der Stahlträger, an dem das Parallelogrammgerät befestigt ist, gedreht wird, können die Hacken stärker oder geringer einstechend eingestellt werden. Die Hacken sind flache Messer, die an einer oder an beiden Seiten ihre Funktion ausüben.

Beidseitig funktionierende Messer (Gänsefussmesser) werden zum Jäten von Getreidegewächsen verwendet. Solche Messer werden auch für das Jäten von Anpflanzungen von Rüben und Kartoffeln angewandt.

Dabei ergibt sich das Problem, dass die Zuchtbeete für in Reihen wachsende Pflanzen zumeist sogenannte Schrägzuchtbeete sind, die parallel verlaufende schräg hochgehende Kanten aufweisen, sodass das Jäten derselben, mit Jätegeräten an Schleppern sowie mit Motorjätemaschinen, bislang vielfach grosse Probleme und wenig befriedigende Ergebnisse zeitigte.

Auch mit mehreren Jätevorrichtungen an einem einzigen Zugbalken hinter einem Schlepper kann auf unebenem Gelände und insbesondere auf Schrägbeeten keine zweckmässige Entfernung des Unkrauts erreicht werden.

Diese abschüssigen Beete mit geneigten Seitenkanten sind hauptsächlich für Gemüse- und Knollenanbau vorgesehen, wie Kartoffeln, Zichorienwurzeln, Spargel, Schwarzwurzeln, Karotten, doch sie werden auch verwendet in der Blumenzucht, für Früchte, wie Erdbeeren, und auch für andere junge Kulturgewächse, wie Baumschulen, Reben, Hopfen und für Viehfuttergewächse, wie Mais.

Im Belgischen Patent 637 330 ist ein Jätegerät zur Montage vor einem Traktor beschrieben, wobei das horizontale Jätemesser an einer vertikalen Stange montiert ist, die federnd in einer Halterung angebracht ist.

Dieses Gerät ist für den Einsatz auf ebenen leichten und sandigen Böden gedacht, jedoch nicht für Schrägzuchtbeete geeignet.

"Im U.S. Patent 1,769,142 wird ein Bodenbearbeitungsgerät beschrieben, welches schräg einstellbare Schaufeln zum Vorbereiten und Eggen von Beeten umfasst. Das Gerät kann zum Anhäufen, Andrücken und Glätten von streifenformigen Beeten mit abschüssigen Kanten dienen. Die Schaufeln sind paarweise zwischen Rädern angebracht, und die innere Paare können in einem Winkel zu den äusseren eingestellt werden. Dazu sind die inneren Schaufeln mittels eines Flansches an den Radachsen und einem verbindenden Bügel befestigt.

Das Gerät gemäss der vorliegenden Erfindung ist ein Jätegerät für die Entfernung von Unkraut aus Beeten mit abgeschrägten Kanten, das scharnierende Halterungen mit unter einem Winkel einstellbaren Jätemessern enthält, und mit einem Schlepper verbunden werden kann, mittels eines Zugbalkens (1), der bezüglich der Fahrtrichtung quer an dem Schlepper montierbar ist, und es ist gekennzeichnet durch Einstellbügel (2), die seitlich verschiebbar sind, an denen Scharniergelenke (4) angebracht sind, mit einer Flügelschraube (3) zum versetzen des auf-oder abgehenden Gangs, mit welchen Gelenken (4) ein Führungsschaft (5) scharnierend verbunden ist, welcher eine Halterung (9) des Jätemessers (13) führt, während eine Druckfeder (6) am Führungsschaft (5) den Druck des Jätemessers regelt, und der Führungsschaft (5) mit einem Lager (7) die Führungsstange (8) enthält, wobei ein Stellbolzen (11) zum Einstellen und festhalten des Messers (13) dient, und ein Schlepprad (10) in einer Radgabel (12) an der Halterung (9) läuft".

Da die Jätehalterung in der Höhe ein- und ausschiebbar hinsichtlich des scharnierenden Schaftes ist, kann sie der Höhe der Beete angepasst werden.

Für die Fixierung des Bügels und des Führungsschaftes sowie der Halterung im Schaft sind Einstellöffnungen mit Stellbolzen vorgesehen, wobei eine Federung am Schaft entlang zum Andrücken auf das Beet beiträgt.

Die Jätemaschine besteht aus einem Halterungsarm mit Einstellöffnungen, Stellbolzen und einer Druckfeder, und der Gang ist einstellbar, wobei die Halterung für das Jätemesser in dem schaftförmigen Halterungsarm auf und ab geschoben werden kann, und darin in der erwünschten Höhe mit Bolzen fixiert werden kann.

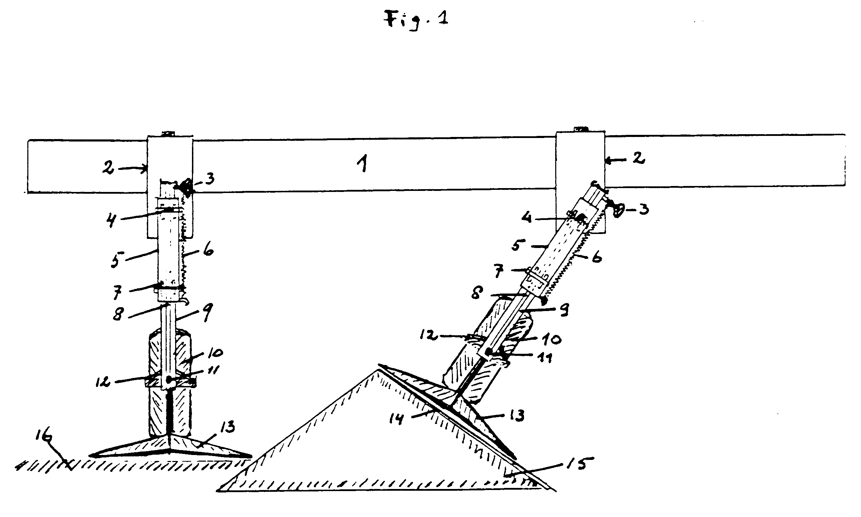

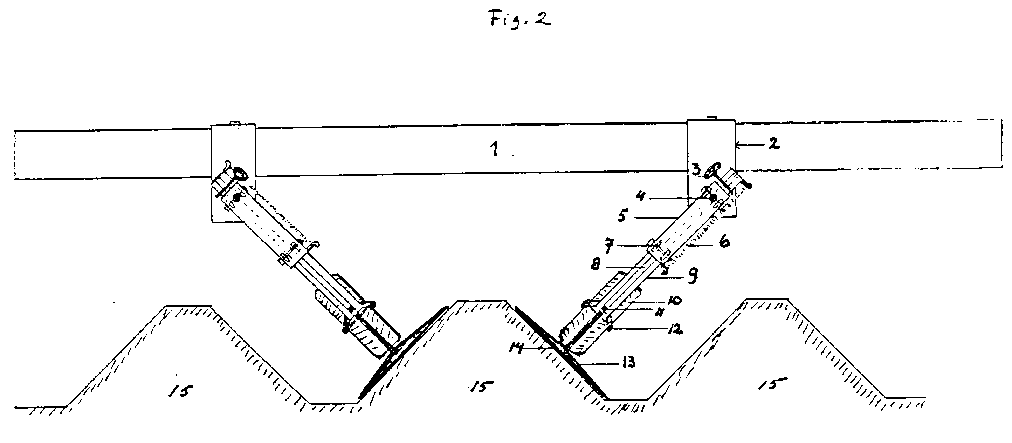

Die Erfindung wird an Hand der beigefügten Figuren 1 und 2 näher erläutert.

Figur 1 zeigt schematisch die erfindungsgemässe Jätevorrichtung bei der Anwendung auf flachem Boden und auf der abschüssigen Kante eines Beetes für Wachstum auf überhöhter Fläche.

Figur 2 zeigt in derselben Art, wie neben einander liegende überhöhte Beete gleichzeitig von mehreren neben einander am Zugbalken des Schleppers befestigten Hack- oder Jätegeräten erfindungsgemäss gejätet werden können.

In dieser Figur ist die scharnierende Stellung gemäss einem Winkel zu sehen, die der abschüssigen Seite des überhöhten Beetes völlig angepasst ist.

In beiden Figuren sind dieselben Teile der Vorrichtung mit identischen Positionsnummern angegeben.

In diesen Figuren ist folgendes dargestellt:
(1) ist der Zugbalken, der bezüglich der Fahrtrichtung quer an dem Schlepper montiert ist.

Auf diesem Zugbalken (1) ist der Einstellbügel (2) montiert, der seitlich verschoben werden kann.

Mit diesem Einstellbügel (2) ist der Führungsschaft (5) am Scharniergelenk (4) scharnierend verbunden, sodass dieser sowohl vertikal wie auch in einem Winkel die Halterung (9) des Jätemessers (13) führen kann.

Die Flügelschraube (3) dient zum versetzen des auf- und abgehenden Gangs, während eine Druckfeder (6) am Schaft (5) entlang dazu dient, den Druck des Rades (10) und des Jätemessers (13) zu regeln.

Der Schaft (5) enthält Führungslager (7), vorzugsweise Kugellager, über die sich die Führungsstange (8) aus dem Schaft (5) erstreckt, wobei die Stange mittels der Flügelschraube (3) in der erwünschten Höhe fixiert wird.

Das Messer (13) kann vom Rad (10) unabhängig eingestellt werden und festgehalten werden mit Hilfe des Stellbolzens (11).

An der Halterung (9) befindet sich ferner die Radgabel (12) und das Jätemesser (13).

In den Figuren ist der flache Pfad mit (16), das überhöhte Beet mit (15), und die abschüssige Kante desselben mit (14) angegeben.

In den beigefügten Figuren ist eine der Ausführungsformen wiedergegeben, in welcher das Prinzip der Konstruktion verkörpert ist.

Die erfindungsgemässe Konstruktion ist für alle beweglichen und/oder scharnierenden Hack- und Jäteelemente geeignet, die verwendet werden können zur Entfernung von Unkräutern aus der Anpflanzung von Kultur- und Ziergewächsen, wobei die in einer bestimmten schrägen Position oder einem Winkel, anders als vertikal, seitlich stufenweise fest oder stufenlos montiert, gestellt oder gedreht werden können.

An diesen Hack-oder Jäteelementen können Anhäufelschaufeln oder Häufelpflüge montiert werden, die die beim Hacken oder Jäten des Beetes abfallende Erde wieder auf den Rücken des Beetes auftragen.

Die Anhäufelschaufeln gehen zusammen mit dem Messer oder den Messern (13) vorwärts, sodass immer eine gleiche Menge an Erde angehäuft werden kann. Die Geräte können mit offenen oder dichten Rädern versehen sein.

Mit dieser Konstruktion können sämtliche Typen von Gewächsbeeten in schneller arbeitsparender und sehr zweckmässiger Weise gejätet werden, wobei der Winkel und die Einstelltiefe dem Typus des Bodens oder des Zuchtbeetes völlig angepasst werden können.

## Patentansprüche

1. Jätegerät für die Entfernung von Unkraut aus Schrägzuchtbeeten (Beeten mit abgeschrägten Kanten), das scharnierende Halterungen mit unter einem Winkel einstellbaren Jätemessern enthält, und mit einem Schlepper verbunden werden kann mittels eines Zugbalkens (1), der bezüglich der Fahrtrichtung quer an dem Schlepper montierbar ist,
**gekennzeichnet** durch Einstellbügel (2), die seitlich am Zugbalken (1) verschiebbar sind, an denen Scharniergelenke (4) angebracht sind, mit einer Flügelschraube (3) zum Verstellen des auf-oder abgehenden Gangs, mit welchen Scharniergelenken (4) ein Führungsschaft (5) scharnierend verbunden ist, welcher eine Halterung (9) des Jätemessers (13) führt, wobei mit einer Druckfeder (6) am Führungsschaft (5) der Druck des Jätemessers veränderlich eingestellt werden kann, der Führungsschaft (5) mit einem Lager (7) eine Führungsstange (8) enthält, ein Schlepprad (10) in einer Radgabel (12) an der Halterung (9) läuft, und ein Stellbolzen (11) zum Einstellen und festhalten des Jätemessers (13) gegenüber dem Schepprad dient.

## Claims

1. A weeding device for the removal of ill weeds upon sloped agricultural soil beds, said device having hinged supports with weeding knife blades adjustable at an angle and connectable at a tractor by means of a pull beam (1), which can be mounted at said tractor transversal to the driving direction of the tractor,
**CHARACTERIZED** in that adjusting brackets (2) are movable in a lateral direction at said pull beam (1), provided with hinging joints (4), each with a wing nut (3) for the adjustment in a higher or a lower position, said hinging Joints (4) being connected with a guiding column (5) in a hinging position, guiding a support (9) of the weeding knife blade (13), as the pressure of the weeding knife can be variably adjusted with a compression spring (6) at said guiding column (5), which comprises a guide stem (8) in a bearing spacer (7) and a traction wheel (10) is rotatable at a wheel axle guiding (12) with a support (9), and a set bolt (11) serves for the positioning and the fixation of the weeding knife (13) facing said traction wheel (10).

## Revendications

1. Un outil de sarclage pour l'enlèvement des mauvaises herbes hors des bandes de couches inclinées de l'agriculture, y renfermant des porteurs aux charnières avec des sarcloirs ajustables sous un angle, raccordable à un tracteur par une poutre de trait (1), équipée d'une manière transversale à l'égard de la direction du tracteur, **CARACTÉRISÉ** en ce que des étriers de réglage (2) sont glissables à la poutre (1) dans la direction latérale, prévus de charnières (4) avec une vis aux ailettes (3) pour l'ajustement dans une position plus élevée ou plus basse, lesdites charnières (4) raccordées avec un manchon (5) en position articulée, portant sur un tuyau-porteur (9) du couteau-sarcloir(13) dont la pression du couteau est ajustable au moyen d'un ressort de compression (6) au manchon (5), comprenant une colonne de guidage (8) dans un palier (7) et une roue de roulement (10) tourne dans une fourche à essieu (12) au tuyau-porteur (9), un boulon de réglage (11) pour la mise au point et la fixation du couteau-sarcloir (13) étant vis-à-vis la roue de roulement (10).
